# EUROPEAN PATENT SPECIFICATION

(11) **EP 1 713 210 B1**
(45) Date of publication and mention of the grant of the patent: **24.06.2009**
(21) Application number: 05706585.6
(22) Date of filing: 02.02.2005
(51) Int. Cl.: H04L 12/46, H04L 29/06, H04M 7/00

(54) **A METHOD FOR THE ACHIEVEMENT OF THE MESSAGE TRANSMISSION IN THE H323 SYSTEM**
VERFAHREN ZUR ERZIELUNG DER NACHRICHTENÜBERTRAGUNG IN DEM H323-SYSTEM
PROCEDE DE TRANSMISSION DE MESSAGES DANS LE SYSTEME H323

(30) Priority: 07.02.2004 CN 200410004124
(43) Date of publication of application: 18.10.2006
(73) Proprietor: Huawei Technologies Co., Ltd., Longgang District, Shenzhen, Guangdong Province 518129 (CN)
(72) Inventor: WANG, Qi, Shenzhen, Guangdong 518129 (CN); LEI, Xiaosong, Shenzhen, Guangdong 518129 (CN); MA, Chaohui, Shenzhen, Guangdong 518129 (CN); WANG, Haifeng, Shenzhen, Guangdong 518129 (CN); WU, Bo, Shenzhen, Guangdong 518129 (CN); LIU, Haiyang, Shenzhen, Guangdong 518129 (CN); ZHANG, Qin, Shenzhen, Guangdong 518129 (CN)
(74) Representative: Mounteney, Simon James
(86) International application number: PCT/CN2005/000146
(87) International publication number: WO 2005/079013

(56) References cited:
- CN-A- 1 332 940
- CN-A- 1 360 778
- "Security and encryption for H-series (H.323 and other H.245-based) multimedia terminals" ITU-T STANDARD IN FORCE (I), INTERNATIONAL TELECOMMUNICATION UNION, GENEVA,, CH, no. H235 8/3, 6 August 2003 (2003-08-06), XP017401341
- TOGA J ET AL: "ITU-T standardization activities for interactive multimedia communications on packet-based networks: H.323 and related recommendations" COMPUTER NETWORKS, ELSEVIER SCIENCE PUBLISHERS B.V., AMSTERDAM, NL, vol. 31, no. 3, 11 February 1999 (1999-02-11), pages 205-223, XP004304599 ISSN: 1389-1286
- ZHANG K. ET AL: 'The gatekeeper research in the IP voice technology.' COMPUTER ENGINEERING. vol. 27, no. 1, January 2001, pages 1 - 2, XP008077092
- HAO WEN-CHAO ET AL: 'The research of the gatekeeper acheivement several problems and the policy(I).' JOURNAL OF BEIJING UNIVESITY OF POSTS AND TELECOMMUNICATIONS. vol. 23, no. 2, June 2000,

## Description

### Field of the Technology

The invention relates to network communication technology in general, and more specifically, to a method for providing message transmission in H.323 communication system.

### Background of the Invention

In communication systems, Packet-Based Network (PBN) can not provide a guaranteed quality of service (QoS) and secure service due to technical reasons of itself, which makes PBN become a kind of network without QoS guarantee and security guarantee. The security of H.323 systems, which operate over PBN, therefore involves great concern.

Generally, authentication and privacy techniques are employed by H.323 systems to provide secure services. These authentication and privacy techniques employed by H.323 systems are described in H.235 protocol of Telecommunication Standardization Sector of International Telecommunication Union (ITU-T).

The H.235 protocol of ITU-T describes several security frameworks of authentication and privacy techniques for H.323 systems. At present, the security framework is in general based either on symmetric cryptosystem or on certificate with signatures. The framework based on symmetric cryptosystem, e.g., precontracted password, is simple and easy to be implemented, but the network scalability is poor, requiring that both participants of communication possess a common key in advance. The framework based on certificate with signatures has high security and strong network scalability, but it is complicated to implement and needs support of certification authority institution.

As international standards, the security frameworks for H.323 systems provided by H.235 protocol of ITU-T are not described in detail hereinafter. Please refer to H.235 protocol of ITU-T to obtain detailed description.

H.323 systems provide two routing modes for H.225 protocol based message transmission: Gatekeeper (GK)-routed model and direct-routed model. In the GK-routed model, H.225 protocol messages between two endpoints are transferred through GKs. In the direct-routed model, H.225 protocol messages between two terminals are exchanged directly, rather than transferred through GKs, so the direct routing mode is also referred to as non GK-routed model.

All the security frameworks in H.235 protocol of ITU-T described above aim at technical schemes of security guarantee in the GK-routed model, and so far there has been no specific solution put forward for technique schemes of security guarantee in the non GK-routed model in H.235 protocol of ITU-T. Since the non GK-routed model is very important and widely used in H.323 systems, H.225 protocol message transmission in the non GK-routed model also needs security guarantee.

Document "Security and encryption for H-series (H.323 and other H.245-based) multimedia terminals" ITU-T STANDARD IN FORCE (1), INTERNATIONAL TELECOMMUNICATION UNION, GENEVA, CH, no. H235 8/3, 6 August 2003 (2003-08-06), XP017401341 discloses security procedures for using direct-routed call signaling. However, this document does not disclose that two endpoints can negotiate authentication information through one ore more gatekeepers.

### Summary of the Invention

The invention is defined by the method of independent claim 1 and the system of independent claim 19.

The object of the present invention is to provide a method for providing message transmission in H.323 communication system, making use of secure message transmission of GK-routed model to negotiate expected information that is required by authentication while direct-routed model is adopted to transmit messages between different endpoints, thereby providing security guarantee for direct message transmission between endpoints

In order to obtain the object, the method for providing message transmission in H.323 communication system where a first endpoint needs to exchange one or more messages with a second endpoint directly, comprises:
A. the first endpoint and second endpoint negotiating authentication information through a gatekeeper, GK;
B. according to said authentication information, the first endpoint and second endpoint exchanging the message directly.

Wherein the one or more messages are Q.931 messages.

Wherein the authentication information comprises key information.

Wherein the key information comprises a shared key generated by Diffie-Hellman algorithm.

Wherein the step A comprises:
A1. the first endpoint transmitting a Registration, Admissions, and Status (RAS) message containing first key parameter of the first endpoint to the second endpoint through home GK of the first endpoint and home GK of the second endpoint;
A2. upon receiving the RAS message sent from the first endpoint, the second endpoint obtaining the first key parameter contained in the RAS message, generating second key parameter of the second endpoint, loading the second key parameter in a RAS message and sending the RAS message to the first endpoint through the home GK of the first endpoint and the home GK of the second endpoint;
A3. the first endpoint and the second endpoint generating a shared key based on the first key parameter and the second key parameter.

Wherein the step A1 comprises:
the first endpoint loading the first key parameter in ClearToken of an access request (ARQ)message, and transmitting the ARQ message to the home GK of the first endpoint;
upon receiving the ARQ message, the GK of the first endpoint determining whether it is the home GK of the second endpoint in the ARQ message, if it is, loading the ClearToken in an information request (IRQ) message by the GK and transmitting the IRQ message to the second endpoint; otherwise, loading the ClearToken in a location request (LRQ) message and transmitting the LRQ message to the home GK of the second endpoint;
upon receiving the LRQ message from the home GK of the first endpoint, the home GK of the second endpoint loading the ClearToken in an IRQ message and transmitting the IRQ message to the second endpoint.

Wherein the step of transmitting the LRQ message to the home GK of the second endpoint comprises:
transmitting the LRQ message to a GK connected with the home GK of the first endpoint;
upon receiving the LRQ message, the GK connected with the home GK of the first endpoint forwarding the LRQ message to the home GK of the second endpoint.

Wherein generalID in the ClearToken is configured as the second endpoint; sendersID in the ClearToken is configured as the first endpoint.

Wherein the step A2 comprises:
A21. upon receiving the RAS message transmitted through the GK, the second endpoint obtaining the first key parameter according to information contained in the RAS message, and generating second key parameter of the second endpoint according to the first key parameter;
A22. the second endpoint loading the second key parameter in a ClearToken of an information request response (IRR) message, and transmitting the IRR message to the home GK of the second endpoint; the home GK of the second endpoint deciding whether it is the home GK of the first endpoint in the information response message, if yes, loading the ClearToken in an access confirm (ACF) message by the GK of the second endpoint and transmitting the ACF message to the first endpoint, and then proceeding to step A23; otherwise, the GK of the second endpoint loading the ClearToken in a location confirm (LCF) message and transmitting the LCF message to the GK of the first endpoint; upon receiving the LCF message, the GK of the first endpoint loading the ClearToken in an ACF message and transmitting the ACF message to the first endpoint, and then proceeding to step A23;
A23. upon receiving the ACF message, the first endpoint obtaining the second key parameter according to information of the ClearToken.

Wherein generalID in the ClearToken is configured as the first endpoint; sendersID in the ClearToken is configured as the second endpoint.

Wherein the step B comprises:
the first endpoint directly sending a call setup request message to the second endpoint using the shared key;
upon receiving the call setup request message, the second endpoint performing authentication to the first endpoint according to the shared key, and sending an Alerting message and a call connection message to the first endpoint which passed the authentication using the shared key;
after the call connection is established, the first endpoint sending a call release message to the second endpoint using the shared key when the first endpoint desires to release the call connection; or the second endpoint sending a call release message to the first endpoint using the shared key when the second endpoint desires to release the call connection.

The step A may comprise:
sending, by the first endpoint, an access request (ARQ) message containing a first key parameter of the first endpoint to a first GK where the first endpoint locates;
upon receiving the ARQ message, sending, by the first GK, a location request (LRQ) message containing the first key parameter to second GK where the second endpoint locates;
upon receiving the LRQ message, sending, by the second GK, an information request (IRQ) message containing the first key parameter to the second endpoint;
upon receiving the LRQ message, the second endpoint getting the first key parameter and generating a second key parameter of the second endpoint based on the first key parameter;
the second endpoint generating a share key based on the first key parameter and the second key parameter;
sending, by the second endpoint, an information response request (IRR) message containing the second key parameter to the second GK;
upon receiving the IRR message, sending, by the second GK, an location confirm (LCF) message containing the second key parameter to the first GK;
upon receiving the LCF message, sending, by the first GK, an access confirm (ACF) message containing the second key parameter to the first endpoint;
upon receiving the ACF message, the first endpoint getting the second key parameter and generating the share key based on the first key parameter and the second key parameter.

The step A may comprise:
sending, by the first endpoint, an access request (ARQ) message containing a first key parameter of the first endpoint to a GK where the first endpoint and second endpoint locate;
upon receiving the ARQ message, sending, by the GK, an information request (IRQ) message containing the first key parameter to the second endpoint;
upon receiving the IRQ message, the second endpoint getting the first key parameter and generating a second key parameter based on the first key parameter;
the second endpoint generating a share key based on the first key parameter and the second key parameter;
sending, by the second endpoint, an information response request (IRR) message containing the second key parameter to the GK;
upon receiving the IRR message, sending, by the GK, an access confirm (ACF) message containing the second key parameter to the first endpoint;
upon receiving the ACF message, the first endpoint getting the second parameter and generating the share key based on the first key parameter and the second key parameter.

A system for providing message transmission in H. 323 communication system, may include:
a first endpoint and a second endpoint, the first endpoint needs to exchange one or more messages with the second endpoint directly, wherein
the first endpoint and the second endpoint negotiate authentication information through a gatekeeper, GK; and
the first endpoint and second endpoint exchange the messages directly according to said authentication information.

Seen from the description of above mentioned technical scheme provided by the present invention, it is obvious that the authentication information for direct message transmission between different endpoints needs to be confirmed through negotiation, and the authentication information needs to be negotiated through GK in a secure manner so as to guarantee security of negotiated authentication information between different endpoints. Since a GK can perform security authentication to endpoints dominated by the GK, endpoints can also perform security authentication to their home GKs, and different GKs perform mutual authentication to each other. Because the security of RAS messages can be guaranteed, the security of negotiated authentication information can be guaranteed through secure RAS message. The authentication information of the present invention adopts Diffie-Hellman key exchange technology, which needs not to encrypt and decrypt the intermediate key information such as ClearToken, thereby having no special demands for the intermediate entities such as GK in H.323 system and applying no effect to the performance of intermediate entities. When RAS messages are used to negotiate the shared key, there is no need to statically precontract shared key between different endpoints, which not only permits direct secure message transmission between different endpoints, but also increases the scalability of the H.323 network which is poor by using symmetrical key system in H.235 protocol before. Therefore, the present invention designates and provides a secure framework of message transmission in H.323 system in direct routing mode, thereby improving the security of H.323 system.

### Brief Description of the Drawings

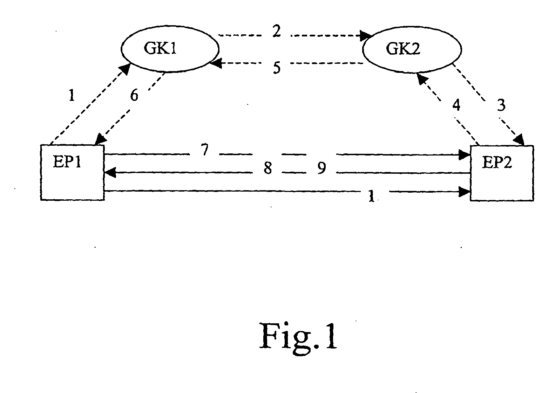

Figure 1 is a schematic flow illustrating message transmission in a H.323 system in accordance with a preferred embodiment of the present invention.

### Detailed Description of the Invention

The present invention will be described in detail hereinafter with reference to accompanying drawings.
According to a preferred embodiment of the present invention, authentication required information for direct message transmission between different endpoints is confirmed through GK routing, and then different endpoints exchange messages directly based on the negotiated authentication required information.
In this way, the present invention put forwards how to negotiate the authentication information for direct message transmission between different endpoints through message transmission of GK-routed model.
Since H.235 protocol of ITU-T provides secure frameworks for message transmission of GK-routed model in H.323 systems, negotiating the authentication information between different endpoints through message transmission of GK-routed model in the present invention can guarantee the security of negotiating the authentication information.
In the present invention, H.225 protocol RAS message transmission is adopted to negotiate the authentication information for direct message transmission between different endpoints. In order to guarantee the security of negotiated authentication information, the security of RAS message should be guaranteed, so the technical scheme provided by the present invention should be implemented under the condition that the security of RAS message is guaranteed.

Since the RAS message should be transmitted through such network entities as endpoint and GK, in order to guarantee the security of RAS message, the GK should perform security authentication to its dominated endpoints, and these endpoints should perform security authentication to their home GK respectively, leading to the endpoints and their home GK trust in each other. Authentication should be implemented between different GKs to avoid malicious network attacks. Through above authentications, secure transmission of RAS message between different endpoints dominated by the same home GK and different GKs can both be guaranteed.

Direct message transmission between different endpoints includes Q.931 message transmission. Shared key is involved in authentication between different endpoints. Since the key exchange technology based on Diffie-Hellman needs no encryption during the procedure of negotiating shared key between an endpoint of one participator and an endpoint of the other participator, it is adopted in the present invention to negotiate the shared key between different endpoints. In this way, there is no need to encrypt information during the procedure of negotiating the shared key, so the performance of the middle entities such as GK in H.323 systems may not be affected by the negotiating process of the shared key.

In this embodiment, different endpoints are set as Endpoint 1 and Endpoint 2, which adopt direct-routed model, rather than GK-routed model, to implement secure message transmission. In the present embodiment, the steps of determining authentication information for direct message transmission between Endpoint 1 and Endpoint 2 include: firstly, Endpoint 1 transmits its key parameters to Endpoint 2 through GK-routed model, and then Endpoint 2 generates its own key parameters according to the key parameters of Endpoint 1 and transmits its own key parameters to Endpoint 1 through GK-routed model. In this way, a shared key between Endpoint 1 and Endpoint 2 is generated, and when using this shared key, the security of direct-routed Q.931 message transmission between Endpoint 1 and Endpoint 2 can be guaranteed.

The detailed technical scheme of determining the authentication information during direct message transmission between Endpoint 1 and Endpoint 2 provided in this embodiment includes: set home GK of Endpoint 1 as GK1, and Endpoint 1 can load its key parameters in a parameter dhkey of ClearToken, designate in a ClearToken that the ClearToken is transmitted by Endpoint 1 and will be transmitted to Endpoint 2, and then load the ClearToken in a RAS message, say an access request (ARQ) message, where the called address in the ARQ message is the address of Endpoint 2. Endpoint 1 transmits the ARQ message to GK1.

Upon receiving the ARQ message transmitted from Endpoint 1, GK1 decides whether GK1 is the home GK of Endpoint 2 according to the called address in the ARQ message. If GK1 is the home GK of Endpoint 2, i.e., Endpoint 1 and Endpoint 2 belongs to the same GK, GK1 will load the ClearToken contained in the ARQ message in an information request (IRQ) message and transmit the IRQ message to Endpoint 2. If GK1 is not the home GK of Endpoint 2, GK1 should inquire the address of Endpoint 2 through other GKs connected with it. If a GK, say GK2, is connected with GK1, GK1 carries the ClearToken contained in the ARQ message in a location request (LRQ) message and transmits the LRQ message to GK2.

Upon receiving the LRQ message, GK2 can determine that the ClearToken information needs to be transmitted to Endpoint 2 according to the ClearToken contained in the LRQ message. GK2 decides whether it is the home GK of Endpoint 2 according to the called address in the LRQ message, if so, GK2 will load the ClearToken in an information request (IRQ) message and transmit the IRQ message to Endpoint 2 in time; otherwise, GK 2 should go on to inquire the address of Endpoint 2 to other GKs connected with it.

Upon receiving the IRQ message transmitted from GK2, Endpoint 2 obtains the key parameters of Endpoint 1 from the dhkey of ClearToken in the IRQ message, generates key parameters of Endpoint 2, computes a session key by Diffie-Hellman algorithm, and then carries the key parameters of Endpoint 2 in dhkey of ClearToken in an information request response (IRR) message. It needs to designate in the ClearToken that the ClearToken is transmitted by Endpoint 2 and will be transmitted to Endpoint 1. Then Endpoint 2 transmits the IRR message to its home GK, GK2.

Upon receiving the IRR message, GK2 determines that the ClearToken will be transmitted to Endpoint 1 according to the ClearToken, i.e., GK2 determines the endpoint which should be responded in the IRR message is Endpoint 1. Then GK2 decides whether it is the home GK of Endpoint 1, if so, Endpoint 1 and Endpoint 2 belong to the same GK, GK2, and GK2 should load the ClearToken of the IRR message in an access confirm (ACF) message and transmit the ACF message to Endpoint 1. If the GK2 is not the home GK of Endpoint 1, Endpoint 1 and Endpoint 2 belong to different GKs, Endpoint 1 belonging to GK1 and Endpoint 2 belonging to GK2. Since a location confirm (LCF) message corresponds to the LRQ message, GK2 should load the ClearToken of the IRR message in the LCF message and transmit the LCF message to GK1. Upon receiving the LCF message from GK2, GK1 determines that the ClearToken needs to be transmitted to Endpoint 1 according to the ClearToken in the LCF message, and carries the ClearToken in an ACF message and transmits the ACF message to Endpoint 1. Endpoint 1 obtains the key parameters of Endpoint 2 from the ClearToken contained in the ACF message. In this way, A shared key between Endpoint 1 and Endpoint 2 is generated and can be used for direct-routed message transmission.

Since H.235 protocol permits various kinds of message authentication to be carried in H.323 message, the technical scheme provided in the present invention is applicable to GK-routed model without any modification, i.e., the endpoints belonging to the same home GK or different home GKs obtain a shared key using the above method, and implement message transmission using the shared key through GK-routed model.

Now, the technical scheme of the present invention will be described in detail hereinafter with reference to figure 1.

In figure 1, the dashed lines indicate the H.225 protocol based RAS message transmission, and the solid lines indicate the H.235 protocol based Q.931 message transmission. EP1 and EP2 indicate two different endpoints in a H.323 system, and GK1 and GK2 indicate two different GKs in the H.323 system. GK1 is home GK of EP1, and GK2 is home GK of EP2.

In this embodiment of the present invention, GK discovery procedure (GRQ/GCF), endpoint registration procedure (RRQ/RCF) and security negotiation between endpoint and its home GK will not be described in detail. Please refer to H.235 protocol for the detailed description.

Step1: EP1 carries the desired shared key parameters in ClearToken of an ARQ message, sets the generalID in the ClearToken as EP2, and sets the sendersID in the ClearToken as EP1. In this way, it can be defined that the ClearToken is transmitted from EP1 to EP2. EP1 transmits the ARQ message to its home GK, GK1.

Step 2: Upon receiving the ARQ message, GK1 transforms the ARQ message to a LRQ message and inquires address of EP2 to GK2 since the called endpoint in the ARQ message is EP2 which doesn't belong to GK1. When transforming the ARQ message, GK1 knows that information in the ClearToken is to be transmitted to EP2 according as the generalID in the ClearToken is EP2, so GK1 carries all information in the ClearToken of the ARQ message in the LRQ message, and transmits the LRQ message to GK2.

Step 3: Upon receiving the LRQ message transmitted from GK1, GK2 determines the generalID of ClearToken in the LRQ message is EP2, indicating that GK2 need to transmit the ClearToken information to EP2. Since GK2 is the home GK of EP2, GK2 carries the ClearToken in an IRQ message and then transmits the IRQ message to EP2, thereby transmitting the ClearToken to EP2 in time.

Step 4: Upon receiving the IRQ message transmitted from GK2, EP2 extracts the dhkey parameter of EP1 from the ClearToken of the IRQ message, generates Diffie-Hellman parameter of its own, computes a session key using Diffie-Hellman algorithm, and then sets its own Diffie-Hellman parameter to the dhkey parameter in ClearToken of an IRR message. At last, sets generalID in the ClearToken as EP1, and sets sendersID in the ClearToken as EP2, indicating that the ClearToken is transmitted from EP2 to EP 1. After that, EP2 transmits an IRR message to GK2.

Step 5: Upon receiving the IRR message transmitted from EP2, GK2 determines that the ClearToken needs to be transmitted to EP1 according to the generalID contained in the ClearToken of the IRR message. GK2 should load the ClearToken in a message and transmits the message to EP1. GK2 may load the ClearToken in a LCF message which corresponds to the LRQ message in Step 2, and transmit the LCF message to GK1.

Step 6: Upon receiving the LCF message transmitted from GK2, GK1 extracts the ClearToken information contained in the LCF message and knows that the ClearToken should be transmitted to EP1 according to generalID in the ClearToken, so GK1 carries the ClearToken information in an ACF message and transmits the ACF message to EP1.

Upon receiving the ACF message transmitted from GK1, EP1 obtains Diffie-Hellman parameters of EP2 from the ClearToken of the ACF message, and then computes a session key using Diffie-Hellman algorithem. In this way, a shared key between EP1 and EP2 is generated through Diffie-Hellman key exchange, and the shared key is expressed as ShareddKeyEp1Ep2. After the shared key between EP1 and EP2 is generated, the security of direct message transmission between EP1 and EP2 can be guaranteed.

The method for applying key during direct message transmission between EP1 and EP2 is the same as the specification of H.235 protocol, which will be illustrated as Step 7 to Step 10:
Step 7: EP1 encrypts a call setup request (Setup) message using ShareddKeyEp1Ep2 and then directly transmits the Setup message to EP2.
Step 8: Upon receiving the Setup message directly transmitted from EP1, EP2 performs authentication to the transmitting party of the Setup message, EP1, using ShareddKeyEp1Ep2, and if authentication is successful, EP2 encrypts an Altering message using ShareddKeyEp1 Ep2, and directly transmits the encrypted Altering message to EP1.
Step 9: EP2 encrypts a call connection message using ShareddKeyEp1Ep2 and directly transmits the encrypted call connection message to EP 1.
Step 10: When any party of EP1 and EP2 desires to release the call connection, the initiating party of release will encrypt a call release message using ShareddKeyEp1Ep2 and directly transmit the encrypted call release message to the other party. For example, EP1 desires to release the call connection, and then EP1 encrypts the call release message using ShareddKeyEp1Ep2 and directly transmits the encrypted call release message to EP2.
Step1 to Step 10 in the embodiment describe a method for securing direct message transmission between two endpoints which belong to different GKs. The method is also adopted to secure direct message transmission between two endpoints which belong to the same GK, and under this condition, since EP1 and EP2 belong to the same GK, i.e., GK1 and GK2 is the same GK, Step 2 and Step 5 can be skipped, with other steps reserved, which will not be illustrated in detail.

To sum up, what is said above is just a relatively preferred embodiment of the present invention. It is not intended to limit the protection scope of the present invention.

## Claims

1. A method for providing message transmission in a H.323 communication system where a first endpoint needs to exchange one or more messages with a second endpoint directly, **characterized in that**:
A. the first endpoint and the second endpoint negotiating authentication information through a gatekeeper GK;
B. according to said authentication information, the first endpoint and second endpoint exchanging the message directly.

2. The method according to Claim 1, wherein the one or more messages are Q.931 messages.

3. The method according to Claim 1, wherein the authentication information comprises key information.

4. The method according to Claim 3, wherein the key information comprises a shared key generated by Diffie-Hellman algorithm.

5. The method according to Claim 1, wherein the step A comprises:
A1. the first endpoint transmitting a Registration, Admissions, and Status, RAS, message containing first key parameter of the first endpoint to the second endpoint through home GK of the first endpoint and home GK of the second endpoint;
A2. upon receiving the RAS message sent from the first endpoint, the second endpoint obtaining the first key parameter contained in the RAS message, generating second key parameter of the second endpoint, loading the second key parameter in a RAS message and sending the RAS message to the first endpoint through the home GK of the first endpoint and the home GK of the second endpoint;
A3. the first endpoint and the second endpoint generating a shared key based on the first key parameter and the second key parameter.

6. The method according to Claim 5, wherein the step A1 comprises:
the first endpoint loading the first key parameter in ClearToken of an access request ARQ, message, and transmitting the ARQ message to the home GK of the first endpoint;
upon receiving the ARQ message, the GK of the first endpoint determining whether it is the home GK of the second endpoint in the ARQ message, if it is, loading the ClearToken in an information request, IRQ, message by the GK and transmitting the IRQ message to the second endpoint; otherwise, loading the ClearToken in a location request, LRQ, message and transmitting the LRQ message to the home GK of the second endpoint;
upon receiving the LRQ message from the home GK of the first endpoint, the home GK of the second endpoint loading the ClearToken in an IRQ message and transmitting the IRQ message to the second endpoint.

7. The method according to Claim 6, wherein the step of transmitting the LRQ message to the home GK of the second endpoint comprises:
transmitting the LRQ message to a GK connected with the home GK of the first endpoint;
upon receiving the LRQ message, the GK connected with the home GK of the first endpoint forwarding the LRQ message to the home GK of the second endpoint.

8. The method according to Claim 6, wherein generalID in the ClearToken is configured as the second endpoint; sendersID in the ClearToken is configured as the first endpoint.

9. The method according to Claim 5, wherein the step A2 comprises:
A21. upon receiving the RAS message transmitted through the GK, the second endpoint obtaining the first key parameter according to information contained in the RAS message, and generating second key parameter of the second endpoint according to the first key parameter;
A22. the second endpoint loading the second key parameter in a ClearToken of an information request response, IRR, message, and transmitting the IRR message to the home GK of the second endpoint; the home GK of the second endpoint deciding whether it is the home GK of the first endpoint in the information response message, if yes, loading the ClearToken in an access confirm, ACF, message by the GK of the second endpoint and transmitting the ACF message to the first endpoint, and then proceeding to step A23; otherwise, the GK of the second endpoint loading the ClearToken in a location confirm, LCF, message and transmitting the LCF message to the GK of the first endpoint; upon receiving the LCF message, the GK of the first endpoint loading the ClearToken in an ACF message and transmitting the ACF message to the first endpoint, and then proceeding to step A23;
A23. upon receiving the ACF message, the first endpoint obtaining the second key parameter according to information of the ClearToken.

10. The method according to Claim 9, wherein generalID in the ClearToken is configured as the first endpoint; sendersID in the ClearToken is configured as the second endpoint.

11. The method according to Claim 5, wherein the step B comprises:
the first endpoint directly sending a call setup request message to the second endpoint using the shared key;
upon receiving the call setup request message, the second endpoint performing authentication to the first endpoint according to the shared key, and sending an Alerting message and a call connection message to the first endpoint which passed the authentication using the shared key

12. The method according to Claim 11, further comprising:
after the call connection is established, the first endpoint sending a call release message to the second endpoint using the shared key when the first endpoint desires to release the call connection; or the second endpoint sending a call release message to the first endpoint using the shared key when the second endpoint desires to release the call connection.

13. The method according to Claim 1, wherein step A comprises:
sending, by the first endpoint, an access request, ARQ, message containing first key parameter of the first endpoint to first GK where the first endpoint locates;
upon receiving the ARQ message, sending, by the first GK, a location request, LRQ, message containing the first key parameter to second GK where the second endpoint locates;
upon receiving the LRQ message, sending, by the second GK, an information request, IRQ, message containing the key first parameter to the second endpoint;
upon receiving the LRQ message, the second endpoint getting the first key parameter and generating second key parameter of the second endpoint based on the first key parameter;
the second endpoint generating a share key based on the first key parameter and the second key parameter;
sending, by the second endpoint, an information response request, IRR, message containing the second key parameter to the second GK;
upon receiving the IRR message, sending, by the second GK, an location confirm, LCF, message containing the second key parameter to the first GK;
upon receiving the LCF message, sending, by the first GK, an access confirm, ACF, message containing the second key parameter to the first endpoint;
upon receiving the ACF message, the first endpoint getting the second key parameter and generating the share key based on the first key parameter and the second key parameter.

14. The method according to Claim 13, wherein the first key parameter is contained in ClearToken of the ARQ message, the LRQ message and the IRR message respectively;
generalID in the ClearToken is configured as the second endpoint; sendersID in the ClearToken is configured as the first endpoint.

15. The method according to Claim 13, wherein the second key parameter is contained in ClearToken of the IRR message, the LCF message and the ACF message respectively;
generalID in the ClearToken is configured as the first endpoint; sendersID in the ClearToken is configured as the second endpoint.

16. The method according to Claim 1, wherein step A comprises:
sending, by the first endpoint, an access request, ARQ, message containing first key parameter of the first endpoint to a GK where the first endpoint and second endpoint locate;
upon receiving the ARQ message, sending, by the GK, an information request, IRQ, message containing the first key parameter to the second endpoint;
upon receiving the IRQ message, the second endpoint getting the first key parameter and generating a second key parameter based on the first key parameter;
the second endpoint generating a share key based on the first key parameter and the second key parameter;
sending, by the second endpoint, an information response request, IRR, message containing the second key parameter to the GK;
upon receiving the IRR message, sending, by the GK, an access confirm (ACF) message containing the second key parameter to the first endpoint;
upon receiving the ACF message, the first endpoint getting the second parameter and generating the share key based on the first key parameter and the second key parameter.

17. The method according to Claim 16, wherein the first key parameter is contained in ClearToken of the ARQ message, the LRQ message and the IRR message respectively;
generalID in the ClearToken is configured as the second endpoint; sendersID in the ClearToken is configured as the first endpoint.

18. The method according to Claim 16, wherein the second key parameter is contained in ClearToiCen of the IRR message, the LCF message and the ACF message respectively;
generalID in the ClearToken is configured as the first endpoint; sendersID in the ClearToken is configured as the second endpoint

19. A system for providing message transmission in H.323 communication system, comprising:
a first endpoint and a second endpoint, wherein the first endpoint needs to exchange one or more messages with the second endpoint directly,
the system **characterized in that**
the first endpoint and the second endpoint are arranged to negotiate authentication information through a gatekeeper, GK; and
the first endpoint and second endpoint are arranged to exchange messages directly according to said authentication information.

## Patentansprüche

1. Verfahren zum Bereitstellen von Nachrichtenübertragung in einem H.323-Kommunikationssystem, wo ein erster Endpunkt eine oder mehrere Nachrichten mit einem zweiten Endpunkt direkt austauschen muss, **dadurch gekennzeichnet, dass:**
A. der erste Endpunkt und der zweite Endpunkt durch einen Gatekeeper GK Authentifizierungsinformation aushandeln;
B. der erste Endpunkt und zweite Endpunkt die Nachricht gemäß der Authentifizierungsinformation direkt austauschen.

2. Verfahren nach Anspruch 1, worin die eine oder die mehreren Nachrichten Q.931-Nachrichten sind.

3. Verfahren nach Anspruch 1, worin die Authentifizierungsinformation Schlüsselinformation umfasst.

4. Verfahren nach Anspruch 3, worin die Schlüsselinformation einen durch den Diffie-Hellman-Algorithmus erzeugten gemeinsamen Schlüssel umfasst.

5. Verfahren nach Anspruch 1, worin Schritt A Folgendes umfasst:
A1. der erste Endpunkt überträgt eine RAS(Registrierung, Zulassung und Status)-Nachricht, die den ersten Schlüsselparameter des ersten Endpunkts enthält, durch den Heimat-GK des ersten Endpunkts und den Heimat-GK des zweiten Endpunkts an den zweiten Endpunkt;
A2. nach Empfang der vom ersten Endpunkt gesendeten RAS-Nachricht erhält der zweite Endpunkt den in der RAS-Nachricht enthaltenen ersten Schlüsselparameter, erzeugt den zweiten Schlüsselparameter des zweiten Endpunkts, lädt den zweiten Schlüsselparameter in eine RAS-Nachricht und sendet die RAS-Nachricht durch den Heimat-GK des ersten Endpunkts und den Heimat-GK des zweiten Endpunkts an den ersten Endpunkt;
A3. der erste Endpunkt und der zweite Endpunkt erzeugen auf der Basis des ersten Schlüsselparameters und des zweiten Schlüsselparameters einen gemeinsamen Schlüssel.

6. Verfahren nach Anspruch 5, worin Schritt A1 Folgendes umfasst;
der erste Endpunkt lädt den ersten Schlüsselparameter in ein ClearToken einer Zugangsanforderungs(ARQ)-Nachricht und sendet die ARQ-Nachricht an den Heimat-GK des ersten Endpunkts;
nach Empfang der ARQ-Nachricht bestimmt der GK des ersten Endpunkts, ob er der Heimat-GK des zweiten Endpunkts in der ARQ-Nachricht ist, falls ja, lädt der GK das ClearToken in eine Informationsanforderungs(IRQ)-Nachricht und überträgt die IRQ-Nachricht an den zweiten Endpunkt; anderenfalls lädt er das ClearToken in eine Positionsanforderungs(LRQ)-Nachricht und überträgt die LRQ-Nachricht an den Heimat-GK des zweiten Endpunkts;
nach Empfang der LRQ-Nachricht vom Heimat-GK des ersten Endpunkts, lädt der Heimat-GK des zweiten Endpunkts das ClearToken in eine IRQ-Nachricht und sendet die IRQ-Nachricht an den zweiten Endpunkt.

7. Verfahren nach Anspruch 6, worin der Schritt des Übertragens der LRQ-Nachricht an den Heimat-GK des zweiten Endpunkts Folgendes umfasst:
Übertragen der LRQ-Nachricht an einen GK, der mit dem Heimat-GK des ersten Endpunkts verbunden ist;
nach Empfang der LRQ-Nacbricht leitet der mit dem Heimat-GK des ersten Endpunkts verbundene GK die LRQ-Nachricht an den Heimat-GK des zweiten Endpunkts weiter.

8. Verfahren nach Anspruch 6, worin die generalID im ClearToken als der zweite Endpunkt konfiguriert ist; die sendersID im ClearToken ist als der erste Endpunkt konfiguriert.

9. Verfahren nach Anspruch 5, worin Schritt A2 Folgendes umfasst:
A21. nach Empfang der durch den GK übertragenen RAS-Nachricht erhält der zweite Endpunkt den ersten Schlüsselparameter gemäß der in der RAS-Nachricht enthaltenen Information und erzeugt den zweiten Schlüsselparameter des zweiten Endpunkts gemäß dem ersten Schlüsselparameter;
A22. der zweite Endpunkt lädt den zweiten Schlüsselparameter in ein ClearToken einer Informationsanforderungsantwort(IRR)-Nachricht und überträgt die IRR-Nachricht an den Heimat-GK des zweiten Endpunkts; der Heimat-GK des zweiten Endpunkts entscheidet, ob er der Heimat-GK des ersten Endpunkts in der Informationsantwortnachricht ist, falls ja, lädt der GK des zweiten Endpunkts das ClearToken in eine Zugangsbestätigungs(ACF)-Nachricht und überträgt die ACF-Nachricht an den ersten Endpunkt, und dann geht es weiter zu Schritt A23; anderenfalls lädt der GK des zweiten Endpunkts das ClearToken in eine Positionsbestätlgungs(LCF)-Nachricht und überträgt die LCF-Nachricht an den GK des ersten Endpunkts; nach Empfang der LCF-Nachricht lädt der GK des ersten Endpunkts das ClearToken in eine ACF-Nachricht und überträgt die ACF-Nachricht an den ersten Endpunkt, und dann geht es weiter zu Schritt A23;
A23. nach Empfang der ACF-Nachricht erhält der erste Endpunkt den zweiten Schlüsselparameter gemäß der Information des ClearToken.

10. Verfahren nach Anspruch 9, worin die generalID im ClearToken als der erste Endpunkt konfiguriert ist; die sendersID im ClearToken ist als der zweite Endpunkt konfiguriert.

11. Verfahren nach Anspruch 5, worin Schritt B Folgendes umfasst:
der erste Endpunkt sendet eine Anrufaufbau-Anforderungsnachricht unter Verwendung des gemeinsamen Schlüssels direkt an den zweiten Endpunkt;
nach Empfang der Anrufaufbau-Anforderungsnachrichricht führt der zweite Endpunkt die Authentifizierung zum ersten Endpunkt gemäß dem gemeinsamen Schlüssel aus und sendet eine Wamungsnachricht und eine Anrutverbindungsnachricht an den ersten Endpunkt, der die Authentifizierung unter Verwendung des gemeinsamen Schlüssels bestanden hat.

12. Verfahren nach Anspruch 11, außerdem umfassend:
nachdem die Anrufverbindung aufgebaut ist, sendet der erste Endpunkt eine Anrufabbaunachricht unter Verwendung des gemeinsamen Schlüssels an den zweiten Endpunkt, wenn der erste Endpunkt die Anrufverbindung abbauen will; oder der zweite Endpunkt sendet eine Anrufabbaunachricht unter Verwendung des gemeinsamen Schlüssels an den ersten Endpunkt, wenn der zweite Endpunkt die Anrufverbindung abbauen will.

13. Verfahren nach Anspruch 1, worin Schritt A Folgendes umfasst:
Sendung durch den ersten Endpunkt einer Zugangsanforderungs(ARQ)-Nachricht, die den ersten Schlüsselparameter des ersten Endpunkts enthält, an den ersten GK, wo der erste Endpunkt angeordnet ist;
nach Empfang der ARQ-Nachricht, Sendung durch den ersten GK einer Positionsanforderungs(LRQ)-Nachricht, die den ersten Schlüsselparameter enthält, an den zweiten GK, wo der zweite Endpunkt angeordnet ist;
nach Empfang der LRQ-Nachricht, Sendung durch den zweiten GK einer Informationsanforderungs(IRQ)-Nachricht, die den ersten Schlüsselparameter enthält, an den zweiten Endpunkt;
nach Empfang der LRQ-Nachricht holt der zweite Endpunkt den ersten Schlüsselparameter und erzeugt den zweiten Schlüsselparameter des zweiten Endpunkts auf der Basis des ersten Schlüsselparameters;
der zweite Endpunkt erzeugt einen gemeinsamen Schlüssel auf der Basis des ersten Schlüsselparameters und des zweiten Schlüsselparameters;
Sendung durch den zweiten Endpunkt einer Informationsantwortanforderungs(IRR)-Nachricht, die den zweiten Schlüsselparameter enthält, an den zweiten GK;
nach Empfang der IRR-Nachricht Sendung durch den zweiten GK einer Positionsbestätigungs(LCF)-Nachricht, die den zweiten Schlüsselparameter enthält, an den ersten GK;
nach Empfang der LCF-Nachricht Sendung durch den ersten GK einer Zugangsbestätigungs(ACF)-Nachricht, die den zweiten Schlüsselparameter enthält, an den ersten Endpunkt;
nach Empfang der ACF-Nachricht holt der erste Endpunkt den zweiten Schlüsselparameter und erzeugt den gemeinsamen Schlüssel auf der Basis des ersten Schlüsselparemeters und des zweiten Schlüsselparameters.

14. Verfahren nach Anspruch 13, worin der erste Schlüsselparameter im ClearToken der ARQ-Nachricht, der LRQ-Nachricht bzw. der IRR-Nachricht enthalten ist;
die generalID im ClearToken ist als der zweite Endpunkt konfiguriert; die sendersID im ClearToken ist als der erste Endpunkt konfiguriert.

15. Verfahren nach Anspruch 13, worin der zweite Schlüsselparameter im ClearToken der IRR-Nachricht, der LCF-Nachricht bzw. der ACF-Nachricht enthalten ist;
die generalID im ClearToken ist als der erste Endpunkt konfiguriert; die sendersID im ClearToken ist als der zweite Endpunkt konfiguriert.

16. Verfahren nach Anspruch 1, worin Schritt A Folgendes umfasst:
Sendung durch den ersten Endpunkt einer Zugangsanforderungs(ARQ)-Nachricht, die den ersten Schlüsselparameter des ersten Endpunkts enthält, an einen GK, wo der erste Endpunkt und der zweite Endpunkt angeordnet sind;
nach Empfang der ARQ-Nacltricht Sendung durch den GK einer Informationsanforderungs(IRQ)-Nachricht, die den ersten Schlüsselparameter enthält, an den zweiten Endpunkt;
nach Empfang der IRQ-Nachricht holt der zweite Endpunkt den ersten Schlüsselparameter und erzeugt einen zweiten Schlüsselparameter auf der Basis des ersten Schlüsselparameters;
der zweite Endpunkt erzeugt einen gemeinsamen Schlüssel auf der Basis des ersten Schlüsselparameters und des zweiten Schlüsselparameters;
Sendung durch den zweiten Endpunkt einer Informationsanforderungsantwort(IRR)-Nachricht, die den zweiten Schlüsselparameter enthält, an den GK;
nach Empfang der IRR-Nachricht Sendung durch den GK einer Zugangsbestätigungs(ACF)-Nachricht, die den zweiten Schlüsselparameter enthält, an den ersten Endpunkt;
nach Empfang der ACF-Nachricht holt der erste Endpunkt den zweiten Parameter und erzeugt den gemeinsamen Schlüssel auf der Basis des ersten Schlüsselparameters und des zweiten Schlüsselparameters.

17. Verfahren nach Anspruch 16, worin der erste Schlüsselparameter im ClearToken der ARQ-Nachricht, der LRQ-Nachricht bzw. der IRR-Nachricht enthalten ist;
die generalID im ClearToken ist als der zweite Endpunkt konfiguriert; die sendersID im ClearToken ist als der erste Endpunkt konfiguriert.

18. Verfahren nach Anspruch 16, worin der zweite Schlüsselparameter im ClearToken der IRR-Nachricht, der LCF-Nachricht bzw. der ACF-Nachricht enthalten ist;
die generalID im ClearToken ist als der erste Endpunkt konfiguriert; die sendersID im CleatToken ist als der zweite Endpunkt konfiguriert.

19. System zum Bereitstellen von Nachrichtenübertragung in einem H.323-Kommunikationssystem, Folgendes umfassend:
einen ersten Endpunkt und einen zweiten Endpunkt, worin der erste Endpunkt mit dem zweiten Endpunkt eine oder mehrere Nachrichten direkt austauschen muss,
das System ist **dadurch gekennzeichnet, dass**
der erste Endpunkt und der zweite Endpunkt dazu angeordnet sind, Authentifizierungsinformation durch einen Gatekeeper, GK, auszuhandeln; und
der erste Endpunkt und der zweite Endpunkt dazu angeordnet sind, Nachrichten gemäß der Authentifizierungsinformation direkt auszutauschen.

## Revendications

1. Procédé destiné à assurer une transmission de messages dans un système de communication H.323 où un premier point terminal nécessite l'échange d'un ou plusieurs messages directement avec un second point terminal, **caractérisé en ce que** :
A. le premier point terminal et le second point terminal négocient des informations d'authentification par l'intermédiaire d'un contrôleur d'accès GK ;
B. selon lesdites informations d'authentification, le premier point terminal et le second point terminal s'échangent directement le message.

2. Procédé selon la revendication 1, dans lequel les un ou plusieurs messages sont des messages Q.931.

3. Procédé selon la revendication 1, dans lequel les informations d'authentification comprennent les informations de clé.

4. Procédé selon la revendication 3, dans lequel les informations de clé comprennent une clé partagée générée par un algorithme de Diffie-Hellman.

5. Procédé selon la revendication 1, dans lequel l'étape A comprend les sous-étapes suivantes :
A1. le premier point terminal transmet un message d'enregistrement, d'accès et de statut, RAS, contenant le premier paramètre de clé du premier point terminal au second point terminal par l'intermédiaire d'un GK résident du premier point terminal et d'un GK résident du second point terminal ;
A2. lors de la réception du message RAS envoyé à partir du premier point terminal, le second point terminal obtient le premier paramètre de clé contenu dans le message RAS, génère un second paramètre de clé du second point terminal, charge le second paramètre de clé dans un message RAS et envoie le message RAS au premier point terminal par l'intermédiaire du GK résident du premier point terminal et du GK résident du second point terminal ;
A3. le premier point terminal et le second point terminal génèrent une clé partagée en fonction du premier paramètre de clé et du second paramètre de clé.

6. Procédé selon la revendication 5, dans lequel l'étape A1 comprend les sous-étapes suivantes:
le premier point terminal charge le premier paramètre de clé dans ClearToken d'un message de demande d'accès, ARQ, et transmet le message ARQ au GK résident du premier point terminal ;
lors de la réception du message ARQ, le GK du premier point terminal détermine s'il s'agit du GK résident du second point terminal dans le message ARQ, si tel est le cas, il charge le ClearToken dans un message de demande d'informations, IRQ, et transmet le message IRQ au second point terminal ; sinon, il charge le ClearToken dans un message de demande de localisation, LRQ, et transmet le message LRQ au GK résident du second point terminal ;
lors de la réception du message LRQ à partir du GK résident du premier point terminal, le GK résident du second point terminal charge le ClearToken dans un message IRQ et transmet le message IRQ au second point terminal.

7. Procédé selon la revendication 6, dans lequel l'étape de transmission du message LRQ à un GK résident du second point terminal comprend les sous-étapes suivantes :
transmettre le message LRQ au GK relié au GK résident du premier point terminal ;
lors de la réception du message LRQ, le GK relié au GK résident du premier point terminal transmet le message LRQ au GK résident du second point terminal.

8. Procédé selon la revendication 6, dans lequel l'identifiant général dans le ClearToken est configuré comme le second point terminal; l'identifiant d'émetteurs dans le ClearToken est configuré comme le premier point terminal.

9. Procédé selon la revendication 5, dans lequel l'étape A2 comprend les sous-étapes suivantes :
A21. lors de la réception du message RAS transmis par l'intermédiaire du GK, le second point terminal obtient le premier paramètre de clé selon les informations contenues dans le message RAS et génère le second paramètre de clé du second point terminal en fonction du premier paramètre de clé ;
A22. le second point terminal charge le second paramètre de clé dans un ClearToken d'un message de réponse de demande d'informations, IRR, et transmet le message IRR au GK résident du second point terminal ; le GK résident du second point terminal décide s'il s'agit du GK résident du premier point terminal dans le message de réponse d'informations, si tel est le cas, il charge le ClearToken dans un message de confirmation d'accès, ACF, et transmet le message ACF au premier point terminal, puis passe à l'étape A23 ; sinon, le GK du second point terminal charge le ClearToken dans un message de confirmation de localisation, LCF, et transmet le message LCF au GK du premier point terminal ; lors de la réception du message LCF, le GK du premier point terminal charge le ClearToken dans un message ACF et transmet le message ACF au premier point terminal, puis passe à l'étape A23 ;
A23. lors de la réception du message ACF, le premier point terminal obtient le second paramètre de clé selon les informations de ClearToken.

10. Procédé selon la revendication 9, dans lequel l'identifiant général dans le ClearToken est configuré comme le premier point terminal; l'identifiant d'émetteurs dans le ClearToken est configuré comme le second point terminal.

11. Procédé selon la revendication 5, dans lequel l'étape B comprend les sous-étapes suivantes :
le premier point terminal envoie directement un message de demande d'établissement de communication au second point terminal en utilisant la clé partagée ;
lors de la réception du message de demande d'établissement de communication, le second point terminal réalise l'authentification vers le premier point terminal selon la clé partagée, et envoie un message d'alerte et un message de connexion de communication au premier point terminal qui a passé l'authentification en utilisant la clé partagée.

12. Procédé selon la revendication 11, comprenant en outre l'étape suivante :
après l'établissement de la connexion de communication, le premier point terminal envoie un message de libération de communication au second point terminal en utilisant la clé partagée lorsque le premier point terminal souhaite libérer la connexion de communication; ou le second point terminal envoie un message de libération de communication au premier point terminal en utilisant la clé partagée lorsque le second point terminal souhaite libérer la connexion de communication.

13. Procédé selon la revendication 1, dans lequel l'étape A comprend :
l'envoi par le premier point terminal d'un message de demande d'accès, ARQ, contenant le premier paramètre de clé du premier point terminal au premier GK où le premier point terminal se situe ;
lors de la réception du message ARQ, l'envoi par le premier GK d'un message de demande de localisation, LRQ, contenant le premier paramètre de clé au second GK où le second point terminal si situe ;
lors de la réception du message LRQ, l'envoi par le second GK d'un message de demande d'informations, IRQ, contenant le premier paramètre de clé au second point terminal ;
lors de la réception du message LRQ, l'obtention du premier paramètre de clé et la génération du second paramètre de clé par le second point terminal en fonction du premier paramètre de clé ;
la génération par le second point terminal d'une clé partagée en fonction du premier paramètre de clé et du second paramètre de clé ;
l'envoi par le second point terminal d'un message de demande de réponse d'informations, IRR, contenant le second paramètre de clé au second GK ;
lors de la réception du message IRR, l'envoi par le second GK d'un message de confirmation de localisation, LCF, contenant le second paramètre de clé au premier GK ;
lors de la réception du message LCF, l'envoi par le premier GK d'un message de confirmation d'accès, ACF, contenant le second paramètre de clé au premier point terminal ;
lors de la réception du message ACF, l'obtention du second paramètre de clé et la génération de la clé partagée par le premier point terminal en fonction du premier paramètre de clé et du second paramètre de clé.

14. Procédé selon la revendication 13, dans lequel le premier paramètre de clé est contenu dans ClearToken du message ARQ, du message LRQ et du message IRR respectivement ;
l'identifiant général dans le ClearToken est configuré comme le second point terminal ; l'identifiant d'émetteurs dans le ClearToken est configuré comme le premier point terminal.

15. Procédé selon la revendication 13, dans lequel le second paramètre de clé est contenu dans ClearToken du message IRR, du message LCF et du message ACF respectivement ;
l'identifiant général dans le ClearToken est configuré comme le premier point terminal ; l'identifiant d'émetteurs dans le ClearToken est configuré comme le second point terminal.

16. Procédé selon la revendication 1, dans lequel l'étape A comprend :
l'envoi par le premier point terminal d'un message de demande d'accès, ARQ, contenant le premier paramètre de clé du premier point terminal à un GK où le premier point terminal et le second point terminal se situent ;
lors de la réception du message ARQ, l'envoi par le GK d'un message de demande d'informations, IRQ, contenant le premier paramètre de clé au second point terminal ;
lors de la réception du message IRQ, l'obtention du premier paramètre de clé et la génération du second paramètre de clé par le second point terminal en fonction du premier paramètre de olé ;
la génération par le second point terminal d'une clé partagée en fonction du premier paramètre de clé et du second paramètre de clé ;
l'envoi par le second point terminal d'un message de demande de réponse d'informations, IRR, contenant le second paramètre de clé au GK ;
lors de la réception du message IRR, l'envoi par le GK d'un message de confirmation d'accès (ACF) contenant le second paramètre de clé au premier point terminal ;
lors de la réception du message ACF, l'obtention du second paramètre et la génération de la clé partagée par le premier point terminal en fonction du premier paramètre de clé et du second paramètre de clé.

17. Procédé selon la revendication 16, dans lequel le premier paramètre de clé est contenu dans ClearToken du message ARQ, du message LRQ et du message IRR respectivement ;
l'identifiant général dans le ClearToken est configuré comme le second point terminal; l'identifiant d'émetteurs dans le ClearToken est configuré comme le premier point terminal.

18. Procédé selon la revendication 16, dans lequel le second paramètre de clé est contenu dans ClearToken du message IRR, du message LCF et du message ACF respectivement ;
l'identifiant général dans le ClearToken est Configuré comme le premier point terminal; l'identifiant d'émetteurs dans le ClearToken est configuré comme le second point terminal.

19. Système destiné à assurer une transmission de messages dans un système de communication H.323, comprenant :
un premier point terminal et un second point terminal, où le premier point terminal nécessite l'échange d'un ou plusieurs messages directement avec le second point terminal,
le système étant **caractérisé en ce que :**
le premier point terminal et le second point terminal sont agencés pour négocier des informatisons d'authentification par l'intermédiaire d'un contrôleur d'accès, GK ; et
le premier point terminal et le second point terminal sont agencés pour échanger directement des messages selon lesdites informations d'authentification.
